# EUROPEAN PATENT SPECIFICATION

(11) **EP 2 240 015 B1**
(45) Date of publication and mention of the grant of the patent: **09.08.2017**
(21) Application number: 08863719.4
(22) Date of filing: 12.12.2008
(51) Int. Cl.: A01N 25/30, A01N 59/26, A01N 59/20, A01N 59/16

(54) **COMPOSITIONS FOR THE CONTROL OF PLANT PATHOGENS AND FOR USE AS PLANT FERTILIZER**
ZUSAMMENSETZUNGEN FÜR DIE BEKÄMPFUNG VON PFLANZENPATHOGENEN UND FÜR DIE VERWENDUNG ALS PFLANZENDÜNGER
COMPOSITIONS POUR LA LUTTE CONTRE DES AGENTS PATHOGENES DE PLANTE ET POUR LEUR UTILISATION COMME ENGRAIS

(30) Priority: 20.12.2007 EP 07123860
(43) Date of publication of application: 20.10.2010
(73) Proprietor: Ceradis B.V., 6708 PW Wageningen (NL)
(72) Inventor: VAN DER KRIEKEN, Wim, 6708 RE Wageningen (NL); KOK, Hans, 6871 KS RENKUM (NL); DAVELAAR, Evert, 3906 BH Veenendaal (NL); STEVENS, Luc, 3571 WG Utrecht (NL)
(74) Representative: V.O.
(86) International application number: PCT/NL2008/050796
(87) International publication number: WO 2009/082206

(56) References cited:
- EP-A- 0 249 566
- WO-A-2006/034126
- FR-A- 2 252 056
- FR-A- 2 777 423
- US-A- 4 139 616
- US-A- 4 849 219
- US-A- 5 169 646
- US-A- 5 830 255
- US-A1- 2002 160 054
- DATABASE WPI Section Ch, Week 200067 Thomson Scientific, London, GB; Class C04, AN 2000-682142 XP002472830 & JP 2000 264802 A (SANKYO CO LTD) 26 September 2000 (2000-09-26)

## Description

### Field of the invention

This invention relates to the technical field of formulation technology of plant protection agents and particularly to a composition of plant protecting agents and/or plant fertilizing agents and to a method which substantially prevents the formation of copper or metal phosphite precipitates from phosphorous acid, and/or a salt and/or a hydrate and/or an ester thereof and metal salts that are dissolved in aqueous solvents before and during their combined application. In particular, the composition is used for the control of plant pathogens, i.e. as a fungicide or as a bactericide, and as a plant fertilizer.

### Background of the invention

Agricultural production worldwide is under permanent threat from numerous phytopathogenic fungi and bacteria. For the protection of yield and quality of products and to avoid economic losses, the application of chemical agents that control plant diseases are an absolute requirement. Although the need for pesticides is generally acknowledged, there is an ongoing public concern about the possible negative impact of pesticides on the environment and on human health. As a consequence, the demands with respect to sustainability of chemical pest control are continually increasing, as are the costs to bring new pesticides to the market.

In principle, reduced pressure of chemical pesticides on the environment can be achieved by reduced quantities of chemicals applied for pest control. It is obvious that precise targeting and uniform distribution of the chemicals over the intended site of application is crucial to keep the input of chemicals to the environment as low as possible. This requires optimal formulation and optimal application procedures. Spray drift reduction (i.e. reduction of movement of pesticide through air to a site other than the intended site) is a well-known example of how on a macroscopic level substantial input reductions can be achieved without loss of efficacy. But also on a microscopic, molecular level targeting and distribution of the chemicals can be optimized, allowing significant lower input of absolute quantities of chemicals without loss of efficacy.

For example, it is evident that spray application of dissolved molecules of active components on a plant leaf area will result in a more homogeneous covering of that area with the active components than spray application of the same amount of molecules present as suspended crystals. From this point of view, it is desirable to apply the active ingredient as dissolved molecules or as part of dissolved molecular complexes. On the other hand, however, under practical agricultural conditions active ingredients that are highly soluble in water are readily transported away from the site of their intended deployment of biocide activity, which results in substantially reduced protective power of the pesticide. Therefore, in an ideal situation the active ingredients before and during application are at least present as dissolved molecules or as part of dissolved molecular complexes, whereas after application the active ingredients behave relatively immobile over the long term.

Inorganic copper compounds were the first biocides developed and used. Noteworthy is the reaction product of copper sulphate and calcium hydroxide known as the Bordeaux mixture, which was developed at the end of the 19^{th} century and which is still widely used to control many fungal and bacterial plant diseases. Other examples of inorganic copper salts used as biocides are copper oxychlorides (e.g. sold as Oxycor®), copper hydroxides (e.g. sold as Kocide®, Champ®, and Nu-Cop®), copper oxides (e.g. sold as Nordox®), and copper ammonium carbonate (e.g. sold as Copper Count-N®, and Kop-R-Spray®). Solubility of copper salts ranges from nil (copper oxide) to relatively high (copper sulphate). Besides inorganic copper salts, inorganic salts of other metals are known for their biocide activity.

Little is known about the mode of action of metal containing compounds as biocide. It is generally assumed that copper ions can enter fungal spores and denature proteins and inactivate enzymes. In a published study it was shown that copper fungicides killed spores of Venturia inaequalis by inhibiting mitochondrial respiration (Montag J, Schreiber L, Schönherr J, "An In vitro study of the nature of protective activities of copper sulphate, copper hydroxide and copper oxide against conidia of Venturia inaequalis", J. Phytopathol 154: 474-481, 2006**).** It is well known that mobile copper ions, either present as free ions or as complex (or chelated) ions, exhibit higher efficacy per number of molecules than sparingly soluble or insoluble copper compounds. Physical contact between the insoluble copper compounds and the fungal spores or microorganisms is essential for their biocide effects (Montag J, Schreiber L, Schönherr J, "An In vitro study of the nature of protective activities of copper sulphate, copper hydroxide and copper oxide against conidia of Venturia inaequalis", J. Phytopathol 154: 474-481, 2006.). It is well known that only a minor fraction of each of the insoluble metal particles is involved in the biocide action, and that this provides opportunities to reduce the quantitative input of metal without loss of efficacy.

Metal ions or compounds containing metal ions can be incorporated as active constituents in compositions comprising other active ingredients. Known are combinations with phosphorous acid, and/or a salt and/or an ester thereof. Phosphorous acid (H₃PO₃) or phosphorous acid salts (phosphites or phosphonates) are particularly effective against Oomycete pathogens, such as Phytophthora, Pythium and downy mildews in a number of crops. As is well known in the art, phosphorous acid and salts thereof are distinct from phosphoric acid (H₃PO₄) and salts thereof (phosphates). It is believed that phosphorous acid fungicides act directly on the pathogen and additionally stimulate the plant's natural defence response against the pathogen. The combination of copper with phosphite as fungicidal composition is disclosed at least as early as in the late seventies of the 20^{th} century. For example, the preparation and fungicidal application of cuprous phosphite (Cu₂HPO₃.2H₂O) is disclosed in US 4,075,324. Example 1 of US 4.075,324 discloses such a fungicidal composition as a wettable powder which further contains calcium lignosulfate. Combinations of metal ions and phosphite can be extended furthermore with additional fungicides. For example, fungicidal compositions consisting of a copper(II) salt of phosphorous acid and at least another metal salt of phosphorous acid, combined with or without one or more fungicidal compounds are disclosed in WO 2006/128677. Fungicidal compositions comprising the combination of copper fungicides with phosphorous acid and so-called mandelamide type fungicides are disclosed in WO 2006/136551.

In aqueous fungicidal compositions comprising Cu(II) ions and phosphite ions, these ions are mainly present as solid copper(II) phosphite particles, since solubility of copper(II) phosphite in water is extremely low. Examples of other metal ions that form precipitates with phosphite in aqueous compositions include magnesium(II), zinc(II), manganese(II), nickel(II), aluminium(III) and copper(I). For example, JP 2000/264802 and US 4849219 describe formulations comprising metal ions and phosphite, which are either mixed and grinded or dissolved in an non-aqueous solvents. Due to this physical presence of copper(II) and/or other fungicidal metal ions as part of solid particles, homogeneous application of copper(II) and/or the other metal ions over the intended site of application is hampered, which substantially reduces their efficacy against the pathogens. Thus, it will be highly desirable to prevent Cu(II) and other metal ions from precipitating with phosphite ions in aqueous fungicidal compositions comprising Cu(II) ions and/or other metal ions and phosphite ions.

A well-known method to prevent metal ions from precipitation with other molecules is complexation of the metal ions with chelators. Chelators are generally defined as compounds that form one or more coordination bonds with a central metal ion, resulting in heterocyclic rings with the central metal ion as part of the ring. Examples of chelators are phosphines, amines, diphosphines, diamines, EDTA, EDDHA, HEDTA, DTPA, citrate, saccharate, gluconate, glucoheptonate and glycine. Referring to US 5,514,200, the phosphite containing fertilizer Nutri-Phite® is especially recommended for its compatibility with metal ions like copper(II) because it contains chelating organic acids like citrate that prevent metal ions like copper(II) from forming precipitates with phosphite. Furthermore, in patent application WO 2002/060248 biocide compositions are disclosed which contain one or more metal ions, phosphite and one or more chelators like citrate. US 2002/160054 describes a composition for controlling growth of pathological organisms comprising one or more of metal ion(s); one or more of chelating agent(s); and phosphorous acid. Although WO 2006/034126 suggests that lignosulfonate can be used as a complexing agent, the complexing capacity of lignosulfonate is very low in the acidic pH-range (see enclosed Table; Kulik et al. 1986. J Electroanal Chem 214:331-342).

However, soluble chelates of metal ions are readily transported away from the site of application. It is generally acknowledged that soluble chelates of metal ions, as do soluble metal ions, introduce the risk for phytotoxicity due to rapid uptake by the plant of these mobile or mobilised metal ions. In addition it is common knowledge that in agricultural practice soluble metal salts or soluble chelates of metal ions readily are washed off from the site of application during moist or rainy periods. Because of those reasons insoluble biocide copper compounds or insoluble biocide metal compounds often are desired. Thus, it would be highly advantageous to prevent Cu(II) and other metal ions in aqueous fungicidal compositions from becoming part of highly mobile complexes like soluble chelates.

EP A 249.566 discloses bactericide compositions comprising a metal salt of a phosphorous acid monoester, said bactericide compositions being used for treating plants suffering from bactericidal diseases. Examples C, E and H disclose such a bactericide composition in powder form which further contains calcium or sodium lignosulfonate and optionally a metal salt, e.g. calcium carbonate.

US 4,139,616 discloses compositions for controlling fungus diseases which contain as active material a metal salt of a phosphorous acid monoester. Examples 1 and 2 disclose such compositions as wettable powders which further contain calcium lignosulfate.

It is therefore an objective of the present invention to provide a composition of plant protecting agents and/or plant fertilizing agents and to a method which substantially prevents the formation of copper or metal phosphite precipitates from phosphorous acid, and/or a salt and/or a hydrate and/or an ester thereof and metal salts that are dissolved in aqueous solvents before and during their combined application. Hence, the method ensures that after application, the active ingredients behave relatively immobile over the long term.

### Summary of the invention

The present invention relates to an aqueous composition comprising a metal compound, a lignosulfonate and phosphorous acid and/or a salt and/or a hydrate and/or an ester thereof, wherein the composition is a solution, and wherein the composition has a pH of 4.5 to 6. The composition is in particular a fungicide or bactericide composition, or a plant fertilizer composition.The present invention also relates to a method for preparing an aqueous composition comprising a metal compound, a lignosulfonate and phosphorous acid and/or a salt and/or a hydrate and/or an ester thereof, wherein the composition is a solution, and wherein (a) a metal compound, a lignosulfonate and phosphorous acid and/or a salt and/or a hydrate and/or an ester thereof are mixed; and (b) water is added to the mixture formed in step (a), wherein the composition has a pH of 4.5 to 6.

Finally, the present invention relates to the use of an aqueous composition comprising a metal compound, a lignosulfonate and phosphorous acid and/or a salt and/or a hydrate and/or an ester thereof, for preventing the formation of a metal phosphite precipitate in an aqueous composition, wherein the composition is a solution; and wherein the composition has a pH between 4.5 and 6, and the use of said composition as a fungicide, a bactericide or as a plant fertilizer.

### Detailed description of the invention

The verb "to comprise" as is used in this description and in the claims and its conjugations are used in its non-limiting sense to mean that items following the word are included, but items not specifically mentioned are not excluded. In addition, reference to an element by the indefinite article "a" or "an" does not exclude the possibility that more than one of the elements are present, unless the context clearly requires that there is one and only one of the elements. The indefinite article "a" or "an" thus usually means "at least one".

In this description, lignosulfonates (CAS number 8062-15-5) are to be understood as water soluble anionic polymers which are formed as byproducts in the sulphite pulping process. Lignosulfonates have generally a wide molecular weight distribution, typically in the range of about 500 to about 150.000. Lignosulfonates may comprise different metal or ammonium ions as counter cations of the sulfonate groups, e.g. calcium (cf. www.lignin.org).

In this description, the generic terms "phosphite" and "phosphorous acid, and/or a salt and/or a hydrate and/or an ester thereof" encompass phosphorous acid and its tautomeric forms, derivatives such as phosphite salts, i.e. salts of H₂PO₃⁻, HPO₃²⁻ or PO₃³⁻, or esters of phosphorous acid such as ethyl hydrogen phosphonate. Such derivatives may occur in different polymorphous forms. Phosphorous acid has the chemical formula: 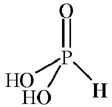 and is therefore distinct from phosphoric acid which has the chemical formula:

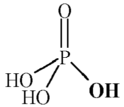

The present invention provides an aqueous composition comprising a metal compound, a lignosulfonate and phosphorous acid and/or a salt and/or a hydrate and/or an ester thereof, wherein it is preferred that the composition is a solution and wherein the composition has a pH of 4.5 to 6. Further described is a method that substantially prevents the formation of a metal phosphite precipitate in an aqueous solvent comprising a composition comprising a metal compound, a lignosulfonate and phosphorous acid and/or a salt and/or a hydrate and/or an ester thereof. The composition can be used to treat agricultural plants or parts thereof and agricultural products, for example as fungicide, bactericide or fertilizer. By preventing the formation of a metal phosphite precipitate, the composition significantly enhances the homogeneous application of metal ion(s), thus enabling reduced input of metal ion(s) without loss of efficacy.

The present inventors have found that surprisingly the formation of metal phosphite precipitate at conditions between a pH of 4.5 to 6, in aqueous compositions of metal salt(s) and phosphite salt(s) is markedly prevented by the presence of a lignosulfonate. Said action by the lignosulfonate is unforeseeable and completely unexpected since it is known that the complexing capacity of lignins and lignin derivatives like Kraft lignin for metal ions decreases with decreasing pH (Kulik F, Wieber J, Pethica B, Zuman P, "Binding of copper(II) and Zinc (II) ions on various lignins", J. Electroanal. Chem. 214:331-342, 1986), and that the complexing capacity of lignosulfonate is very low in the acidic pH-range. This is illustrated by the following Table showing the percentage of copper ions (Cu) complexed to lignosulfonate (LS) at different pH and at different amount of Cu per 100 gram of lignosulfonate (data derived from Borregaard LignoTech Ltd).

| | % complexed Cu | | |
|---|---|---|---|
| pH | 11 g Cu/100 g LS | 8.5 g Cu/100 g LS | 5.4 g Cu/100 g LS |
| 9 | 100 | 100 | 100 |
| 7 | 92 | 89 | 82 |
| 5 | 18 | 15 | 13 |
| 3 | 10 | 10 | 9.5 |

The low complexing capacity, amongst other characteristics of lignosulfonates, makes a lignosulfonate very suitable as additive to fungicidal compositions comprising metal ions and phosphite, since precipitation of metal phosphites is inhibited and highly mobile chelates are not formed.

The present inventors have found that said action of the lignosulfonate is largely preventive, since the formation of a metal phosphite precipitate is irreversible, i.e. it cannot be reversed by the addition of a lignosulfonate afterwards, whereas said formation of a metal phosphite precipitate can easily be reversed by the afterwards addition of minor amounts of chelators like EDTA or citrate. It is therefore crucial that a lignosulfonate is already part of the composition comprising the metal salt(s) and phosphite salt(s) before said composition is mixed with aqueous solvent(s), or, in other embodiments of the invention, that metal salt(s) and phosphite salt(s) are mixed with aqueous solvents that comprise lignosulfonate.

In a preferred embodiment of the present invention, the ratio of metal ion(s) to lignosulfonate (in weight) in the composition is between 1:1 (w/w) and 1:100 (w/w), preferably between 1:5 (w/w) and 1:20 (w/w), and the concentration of phosphorous acid and/or a salt and/or a hydrate and/or an ester thereof is between 0.1 mM and 2000 mM, preferably between 20 mM and 1500 mM.

Suitable examples of phosphite salts include KH₂PO₃, K₂HPO₃, NaH₂PO₃, Na₂HPO₃, ethyl hydrogen phosphonate, phosphorous acid and mixtures of these compounds. A mixture of e.g. KH₂PO₃ and K₂HPO₃ can easily be obtained by e.g. adding KOH or K₂CO₃ to a final pH of 5.0 - 6.0 to a KH₂PO₃ composition.

Suitable examples of metal compounds include copper carbonate, copper hydroxide, copper oxychloride, copper sulfates, copper oxides, copper nitrate, copper salts of fatty and rosin acids, copper lignosulfonate, zinc oxide, zinc sulfate, zinc lignosulfonate, magnesium sulfate, magnesium lignosulfonate, manganese sulfate, manganese lignosulfonate, and mixtures of these compounds. Preferably, the metal compound comprises a metal ion selected from the group consisting of copper, zinc, magnesium, manganese and mixtures thereof. The metal ion may have different valences or mixed valences. The metal ion may be in a complex form.

Suitable examples of lignosulfonates include sodium lignosulfonate (e.g. sold as Borresperse NA®, Borregaard LignoTech Ltd, Germany), calcium lignosulfonate (e.g. sold as Borresperse CA®, Borregaard LignoTech Ltd, Germany) and ammonium lignosulfonate.

The composition may further comprise one or more compounds as to form a composition with a pH between pH 4.5 and pH 6.0. Suitable examples of such compounds include KOH and K₂CO₃.

The composition according to the invention may optionally comprise additional components. In particular said composition may comprise one or more ionic or non-ionic surfactants, for instance as spreader, wetting agent, dispersant, or emulsifier. Suitable examples of such surfactants include phenolsulfonic acid salts, naphthalenesulfonic acid salts, polycondensates of alkylene oxides with fatty alcohols, with fatty acids, with fatty amines, or with substituted phenols, salts of sulfosuccinic acid esters, fatty acid esters of polyols, esters of polyoxyethylated alcohols or phenols, and derivatives thereof containing sulfate, sulfonate, phosphate or carboxylate groups.

The composition according to the invention may optionally also comprise an adhesive which improves sticking of the bioactive compound(s) to the intended site of application. Suitable examples of such sticking agents are latex based products like Prolong® (Holland Fyto B.V., The Netherlands), Bond® (Loveland Industries Ltd), and Guard 2000® (Headland Agrochemicals Ltd), pinolene/terpene based products like Nu-film® (Hygrotech Saad) and Spray-Fast® (Mandops) and long chain polysaccharides like xanthan gum and guar gum. The composition according to the invention may optionally also contain one or more agriculturally appropriate support, carrier or filler. Suitable examples of such components include clays, silicates, resins, waxes, organic solvents, and mineral and plant oils or derivatives thereof. In general, other components which meet the terms of the conventional formulation techniques may be included.

The aqueous composition according to the present invention is a solution, which can be used for application by means of immersion, pouring, or, preferably, spraying. Said aqueous composition comprises 0.1 wt.% to 40 wt.% of dry matter, preferably 0.5 wt.% to 30 wt.% of dry matter, calculated on the total weight of the aqueous composition. The composition according to the present invention shows systemic, preventive and curative activity to protect plants against plant pathogens. According to a further aspect of the invention said composition can be used to provide the plants with nutrients. The present composition can be applied to the seeds, fruits, flowers or stems of the plant, the plant foliage, stem cuttings, the complete plant or the roots of the plant or the soil or substrate in which the plant is growing or in which it is intended to grow.

Plant diseases that can be controlled by copper-, zinc- or manganese- based fungicides are many and well-known to the person trained in the art of crop protection. Examples include scab on apple (Venturia inaequalis), fire blight on apple (Erwinia amylovora), Phytophthora pod rot on cocoa (Phytophthora megakarya and Phytophthora palmivora), rust on wheat (Puccinia species), blast on rice (Piricularia oryzae), brown path in turf grass (Rhizoctonia and Helminthosporium species), grey mould (Botrytis) on many plant species, for instance strawberry, potato and grapevine, downy and powdery mildew on grapevine (Plasmopara viticola and Uncinula necator), Black Sigatoka on banana (Mycosphaerella fijiensis) and late blight on potato (Phytophthora infestans).

The following examples are given for purely illustrative and non-limiting purposes of the present invention.

### Examples

### Example 1

Copper phosphite precipitate was formed by combining 0.6 g/l of Cu(OH)₂ and 14.4 g/l of KH₂PO₃ in the presence of 1g/l of K₂CO₃ to ensure pH 5.5 in demineralised water. This precipitate immediately disappeared upon addition of the chelating agent disodium EDTA (final concentration of 10 mM). The same was observed after addition of the chelating agent trisodium citrate (final concentration of 10 mM). However, addition of 6 g/l sodium lignosulfonate did not reverse the formation of this precipitate, even not after 48 hours of stirring. This example shows that the complexing capacity of sodium lignosulfonate at pH 5.5 is very low.

### Example 2

6 g of sodium lignosulfonate, 0.6 g of Cu(OH)₂, 14.4 g of KH₂PO₃ and 1g of K₂CO₃ were put together and subsequently mixed with demineralised water to a total volume of 1 litre immediately resulting in a clear solution of pH 5.5. This example shows that the presence of sodium lignosulfonate prevents the formation of copper phosphite precipitate at pH 5.5.

### Example 3

6 g of sodium lignosulfonate was dissolved in 1 litre of demineralised water. Subsequently a mixture of 0.6 g of Cu(OH)₂, 14.4 g of KH₂PO₃ and 1g of K₂CO₃ was added and mixed, immediately resulting in a clear solution of pH 5.5. This example shows that the presence of sodium lignosulfonate prevents the formation of copper phosphite precipitate at pH 5.5.

### Example 4

Solutions were prepared of: (a) 6 mM copper sulphate (CuSO₄.5H₂O), (b) 6 mM zinc sulphate (ZnSO₄.H₂O), (c) 6 g/l sodium lignosulfonate, (d) 10 mM citric acid, (e) 120 mM potassium dihydrogen phosphite (KH₂PO₃), (f) 120 mM potassium dihydrogen phosphate (KH₂PO₄). Solutions were mixed according to Table 1 and 1 g/l of K₂CO₃ was added to achieve a pH of 5.5. The results show that sodium lignosulfonate can prevent formation of precipitates of copper sulphate and zinc sulphate with potassium dihydrogen phosphite but not with potassium dihydrogen phosphate. Citric acid, on the contrary, prevented formation of precipitates of copper sulphate and zinc sulphate with both potassium dihydrogen phosphite and potassium dihydrogen phosphate. This example shows that the ability of lignosulfonate to prevent precipitates depends on the presence of phosphite, which is not the case for a true chelator like citric acid. Table 1 shows the effect of sodium lignosulfonate and citric acid on formation of precipitates by mixtures of CuSO₄, KH₂PO₃ or KH₂PO₄ and ZnSO₄, KH₂PO₃ or KH₂PO₄ at pH 5

**Table 1**

| Mixture | Precipitation |
|---|---|
| Lignosulfonate - CuSO₄ - phosphite | - |
| Lignosulfonate - ZnSO₄ - phosphite | - |
| Lignosulfonate - CuSO₄ - phosphate | + |
| Lignosulfonate - ZnSO₄ - phosphate | + |
| Citric acid - CuSO₄ - phosphite | - |
| Citric acid - ZnSO₄ - phosphite | - |
| Citric acid - CuSO₄ - phosphate | - |
| Citric acid - ZnSO₄ - phosphate | - |

### Example 5

Use of Composition 1 against Black Sigatoka disease of banana, caused by the fungus *Mycosphaerella fijiensis*

### Materials and methods:

### Materials

**Table 2: Composition 1**

| Compound | g/l |
|---|---|
| Sodium lignosulfonate | 143 |
| Cu(OH)₂ | 7.5 |
| ZnSO₄ | 11.3 |
| KH₂PO₃ | 180 |
| K₂CO₃ | 30 |
| pH | 5.5 |

**Table 3: Fungicides treatments and fungicide dosages applied in the experiment**

| Fungicide | | Dosage active ingredient (expressed per spray per hectare) |
|---|---|---|
| Brand name | Active ingredient | |
| Composition 1 | Copper (Cu²⁺) | 52 g |
| | Zinc (Zn²⁺) | 57 g |
| | Phosphite (H₂PO₃-) | 1215 g |
| Pencozeb 75 | Mancozeb | 1500 g |
| Bravo 720 | Chlorothalonil | 720 g |
| Baycor 300 | Bitertanol | 150 g |
| Control | - | 0 |

**Table 4: Preparation of spray mixtures for the experiment (dosage expressed per spray per hectare).**

| | Composition 1 | Pencozeb 75 | Bravo 720 | Baycor 300 |
|---|---|---|---|---|
| Oil | 7.5 l | 7.5 l | 0 | 7.51 |
| Emulsifier | 75 ml | 75 ml | 0 | 75 ml |
| Product | 12.4 l | 2 kg | 1.0 l | 300 ml |
| Water | 0 | 10.5 l | 19.0 l | 12.1 l |
| Total | 20 l | 20 l | 20 l | 20 l |

### Methods

The experiment was carried out at Ekona, Cameroon. The experimental design was a randomized complete block design with 5 treatments in 3 replications. Each plot contained 30 banana pseudostems. The treatments were Composition 1 (see Table 2), three commercially available fungicides Pencozeb 75, Bravo 720 and Baycor 300 with the respective active ingredients mancozeb, chlorothalonil and bitertanol and an untreated control. The commercially available fungicides were applied at a rate normal in practice (see Table 3).

Sprays were prepared by mixing the products in banana spray oil (Banole) and emulsifier (Triton X100) for Composition 1, Pencozeb and Baycor or by mixing with water for Bravo. Each product was applied in dosage of 20 1 / spray / hectare, using a knapsack manual sprayer and a knapsack engine mist blower. The exact spray mixtures for each product are shown in Table 4. The spray volume and way of application for each commercial fungicide reflects the practice in major industrial banana plantations in Cameroon.

The plots were sprayed at an interval of 8-12 days, depending on the weather conditions. The first application was on July 7, 2007 and the last application was on November 23, 2007. Due to strong rainfall no sprays were applied between July 27, 2007 and September 24, 2007. Disease rating was performed weekly during the treatment periods, using the Evolution Status rating.

### Conclusion

Results show that Composition 1 has a higher activity than the commercial fungicides tested. Right after the restart of the applications, the disease rating was clearly lower for the plots treated with Composition 1, indicating a superior rain fastness, or a systemic effect lasting for several weeks or a combination of both these possibilities.

### Example 6

Control of downy mildew (*Plasmopara viticola*) on young grapevine in the greenhouse by Composition 2 and Composition 3

### Materials

**Table 5: Composition 2**

| compound | g/l |
|---|---|
| Sodium lignosulfonate | 6.0 |
| Cu(OH)₂ | 0.64 |
| KH₂PO₃ | 14.4 |
| K₂CO₃ | 1.0 |
| Surfactant | 1.5 |
| pH | 5.5 |

**Table 6: Composition 3**

| compound | g/l |
|---|---|
| Sodium lignosulfonate | 6.0 |
| ZnSO₄ | 0.10 |
| MnSO₄ | 0.88 |
| KH₂PO₃ | 14.4 |
| K₂CO₃ | 1.0 |
| Surfactant | 1.5 |
| pH | 5.5 |

### Methods

The trial was conducted with young plants of grapevine cultivar Merlot in the greenhouse. Treatments were: Composition 2, Composition 3, Copper hydroxide suspension (Commercial fungicide: Champ Flo) and an untreated control. Each treatment had 10 replicate plants. The experimental set-up was a completely randomized design. Application of the treatments was done with a hand sprayer. The products were applied until the liquids started to run of the leaves. The composition of Composition 2 and 3 is given in Table 4 and 5. The Champ Flo solution was prepared at a concentration of 4.3 g / 1.

Treatment of the plants with the fungicides was done at the growth stage of 6-7 leaves per plant.

Inoculation of the plant with the pathogen *Plasmopara viticola* was performed 10 days after the treatment with the fungicides. The pathogen strain was freshly taken from a natural infestation of grapevine. A suspension of spores in water was prepared at the concentration of 20,000 - 30,000 spores/ml. The solution was sprayed on the underside of each leaf. After inoculation the plants were wrapped in plastic for 12 hr to create optimal conditions for infection.

Fifteen days after infection the plants were assessed and the area of sporulation of the fungus on the leaf was estimated as percentage of the total leaf area.

The data were arcsine transformed and analyzed with Analysis of Variance and the Newman - Keul test.

The results of the experiment are shown in Table 7. Table 7 shows the effect of different treatments on the leaf area covered by sporulating *Plasmopara viticola* 15 days after inoculation with the fungus on young plants of grapevine.

**Table 7**

| Treatment | % of area leaf area covered with sporulating fungus | Significance¹ |
|---|---|---|
| Champ Flo | 0.0 | a |
| Composition 2 | 1.4 | a |
| Composition 3 | 0.8 | a |
| Untreated control | 65.3 | b |

| | | |
|---|---|---|
| ¹ Means with different letters are significantly different (p < 0.05 in Newman - Keul test) | | |

### Conclusion

Both Composition 2 and Composition 3 effectively suppress the development of the downy mildew fungus *Plasmopara viticola* on young plants of grapevine in greenhouse test. The effectiveness of both compositions is not significantly different from the commercial copper hydroxide product Champ Flo, which contains a 5.7 times higher concentration of copper hydroxide than composition 2.

### Example 7

Control of powdery mildew (*Uncinula necator*) on young grapevine in the greenhouse by Composition 2 and Composition 3

### Methods

The trial was conducted with young plants (growth stage: 6-7 leaves) of grapevine cultivar Merlot in the greenhouse. Treatments were: Composition 2, Composition 3, and an untreated control. Each treatment had 4 replicate plants. The experimental set-up was a completely randomized design. Application of the treatments was done with a hand sprayer. The products were applied until the liquids started to run of the leaves. The composition of Composition 2 and 3 is given in Table 5 and 6 (see Example 6). The treatments were applied 7, 14, 24 and 34 days after the start of the experiment.

Inoculation of the plant with the pathogen *Uncinula necator* was performed at the start of the experiment. A suspension of spores in water was prepared at the concentration of 20,000 - 30,000 spores / ml. The solution was sprayed on each leaf. After inoculation the plants were wrapped in plastic for 12 hr to create optimal conditions for infection.

Forty four days after infection the plants were assessed and the area of infestation the fungus on the leaf was estimated as percentage of the total leaf area.

The data were arcsine transformed and analyzed with Analysis of Variance and the Newman - Keul test.

The results of the experiment are shown in Table 8. Table 8 shows the effect of different treatments on the leaf area covered by *Uncinula necator* 15 days after inoculation with the fungus on young plants of grapevine.

**Table 8**

| Treatment | % of area leaf area covered with powdery mildew | Significance¹ |
|---|---|---|
| | | |
| Composition 1 | 0.0 | a |
| Composition 2 | 0.0 | a |
| Untreated control | 61.4 | c |

| | | |
|---|---|---|
| ¹ Means with different letters are significantly different (p < 0.05 in Newman-Keul test) | | |

### Conclusion

Composition 2 and Composition 3 effectively controlled powdery mildew caused by *Uncinula necator* over the 40 day period of the trial. No indication of infection with powdery mildew was found on the plants.

### Example 8

Control of late blight (*Phytophthora infestans*) on potato by Composition 2

### Method

The location of the trial was at Ravenstein, the Netherlands.

The plot size was 5 m x 3.75 m with a net plot for assessments of 4 m x 2.25 m. The row spacing was 0.75 m. The potato variety was Bintje. The planting date was May, 5, 2007.

The experiment was set up as a randomized block design in two replications with three treatments: Composition 2 (see Table 5 in example 6) and the commercially available fungicides Shirlan (active ingredient: Fluazinam) and Dithane NewTec (active ingredient Mancozeb).

The plots were flanked by two rows of untreated potatoes that served as inoculum source.

The products were applied six times, preceded by three applications with 2.0 -2.25 kg /ha Dithane NewTec equally applied over the whole trial. The first test application was conducted when first buds of inflorescence were visible. The following five applications were carried out with a 5 -7 days interval. The equipment used to carry out the applications was a tractor mounted compressed-air sprayer with a boom of 3.75 m carrying flat fan nozzles of type XR11003VS.

Shirlan (dosage 0.4 1 /ha/spray) and Dithane NewTec (dosage 2.25 kg/ha/spray) were diluted with water to a volume equivalent to 300 1 / ha, before spraying. Composition 2 was sprayed at 300 l /ha/spray.

Disease progress of *Phytophthora infestans* was rated once or twice per week. The percentage of the leaf area of the potato plants infected with *Phytophthora infestans* was visually estimated.

The data were analyzed with Analysis of Variance and the Newman - Keul test.

### Results

The data showing progress of the disease curves for the three treatments are shown in Table 9. Table 9 shows the effect of fungicide treatments on the progress of late blight (*Phytophthora infestans*) on potato. Data are percentage of leaf surface damaged by late blight. For the ingredients of Composition 2 see Table 5, in example 5.

**Table 9**

| Date | 02-Jul | 05-Jul | 09-Jul | 12-Jul | 16-Jul | 19-Jul | 23-Jul | 27-Jul |
|---|---|---|---|---|---|---|---|---|
| shirlan | 4 | 6.5 | 16.5 | 23.5 | 37.5 | 60 | 65 | 60 |
| dithane | | | | | | | | |
| NewTec | 1.5 | 5 | 9 | 22.5 | 47.5 | 67.5 | 75 | 80 |
| composition 2 | 0.75 | 0.5 | 2.5 | 4 | 6.5 | 7.5 | 12.5 | 17.5 |

The statistical analysis shows that the disease progress in the plots treated with Composition 2 is significantly slower than for the plots treated with Shirlan and Dithane NewTec (p < 0.05, Newman Keul test). The disease progress in the plots treated with Shirlan and Dithane NewTec was not significantly different (p = 0.35, Newman - Keul test).

### Conclusion

Composition 2 is an effective fungicide against late blight (*Phytophthora infestans*) on potato. Composition 2 gave a significantly better protection against leaf infection than the commercially available fungicides Shirlan and Dithane NewTec.

## Claims

1. Aqueous composition comprising a metal compound, a lignosulfonate and phosphorous acid and/or a salt and/or a hydrate and/or an ester thereof, wherein the composition is a solution, and wherein the composition has a pH of 4.5 to 6.

2. Aqueous fungicide or bactericide composition comprising a metal compound, a lignosulfonate and phosphorous acid and/or a salt and/or a hydrate and/or an ester thereof, wherein the composition is a solution, and wherein the composition has a pH of 4.5 to 6.

3. Aqueous fertilizer composition comprising a metal compound, a lignosulfonate and phosphorous acid and/or a salt and/or a hydrate and/or an ester thereof, where in the composition is a solution and wherein the composition has a pH of 4.5 to 6.

4. Composition according to any one of claims 1-3, wherein the composition comprises 0.1 wt.% to 40 wt.% of dry matter, calculated on the total weight of the aqueous composition.

5. Composition according to any one of claims 1-4, wherein the ratio of the metal ion or metal ions to the lignosulfonate is between 1:1 (w/w) and 1:100 (w/w).

6. Composition according to claim 5, wherein the ratio of the metal ion or metal ions to the lignosulfonate is between 1:5 (w/w) and 1:100 (w/w).

7. Composition according to any one of claims 1-6, wherein the concentration of the phosphorous acid and/or a salt and/or a hydrate and/or an ester thereof is between 0.1 mM and 2000 mM.

8. Composition according to any one of claims 1-7, wherein the metal compound comprises a metal ion selected from the group consisting of copper, zinc, manganese, nickel, magnesium and mixtures thereof.

9. Composition according to any one of claims 1-8, wherein the lignosulfonate is selected from the group consisting of sodium lignosulfonate, calcium lignosulfonate, ammonium lignosulfonate, manganese lignosulfonate, copper lignosulfonate, zinc lignosulfonate and mixtures thereof.

10. Composition according to any one of claims 1-9, wherein the composition comprises a surfactant.

11. Method for preparing an aqueous composition comprising a metal compound, a lignosulfonate and phosphorous acid and/or a salt and/or a hydrate and/or an ester thereof, wherein the composition is a solution, and wherein:
(a) a metal compound, a lignosulfonate and phosphorous acid and/or a salt and/or a hydrate and/or an ester thereof are mixed; and
(b) water is added to the mixture formed in step (a), wherein the composition has a pH of 4.5 to 6.

12. Use of an aqueous composition comprising a metal compound, a lignosulfonate and phosphorous acid and/or a salt and/or a hydrate and/or an ester thereof as fungicide, bactericide and/or plant fertilizer, wherein the composition has a pH of 4.5 to 6.

13. Use according to claim 12, wherein the composition is the composition according to any one of claims 1-10.

14. Use of lignosulfonate in an aqueous composition comprising a metal salt and a phosphite salt in order to prevent the formation of a metal phosphite precipitate; wherein the composition is a solution; and wherein the composition has a pH between 4.5 and 6.

## Patentansprüche

1. Wässrige Zusammensetzung, umfassend eine Metallverbindung, ein Lignosulfonat und Phosphorsäure und/oder ein Salz und/oder ein Hydrat und/oder einen Ester davon, wobei die Zusammensetzung eine Lösung ist und wobei die Zusammensetzung einen pH von 4,5 bis 6 hat.

2. Wässrige Fungizid- oder Bakterizidzusammensetzung, umfassend eine Metallverbindung, ein Lignosulfonat und Phosphorsäure und/oder ein Salz und/oder ein Hydrat und/oder einen Ester davon, wobei die Zusammensetzung eine Lösung ist und wobei die Zusammensetzung einen pH von 4,5 bis 6 hat.

3. Wässrige Düngemittelzusammensetzung, umfassend eine Metallverbindung, ein Lignosulfonat und Phosphorsäure und/oder ein Salz und/oder ein Hydrat und/oder einen Ester davon, wobei die Zusammensetzung eine Lösung ist und wobei die Zusammensetzung einen pH von 4,5 bis 6 hat.

4. Zusammensetzung nach einem der Ansprüche 1-3, wobei die Zusammensetzung 0,1 Gew.-% bis 40 Gew.-% von Trockenmasse, berechnet auf das Gesamtgewicht der wässrigen Zusammensetzung, umfasst.

5. Zusammensetzung nach einem der Ansprüche 1-4, wobei das Verhältnis des Metallions oder der Metallionen zu dem Lignosulfonat zwischen 1:1 (Gew./Gew.) und 1:100 (Gew./Gew.) ist.

6. Zusammensetzung nach Anspruch 5, wobei das Verhältnis des Metallions oder der Metallionen zu dem Lignosulfat zwischen 1:5 (Gew./Gew.) und 1:100 (Gew./Gew.) ist.

7. Zusammensetzung nach einem der Ansprüche 1-6, wobei die Konzentration der Phosphorsäure und/oder eines Salzes und/oder eines Hydrats und/oder eines Esters davon zwischen 0,1 mM und 2000 mM beträgt.

8. Zusammensetzung nach einem der Ansprüche 1-7, wobei die Metallverbindung ein Metallion umfasst, ausgewählt aus der Gruppe bestehend aus Kupfer, Zink, Mangan, Nickel, Magnesium und Gemischen davon.

9. Zusammensetzung nach einem der Ansprüche 1-8, wobei das Lignosulfonat ausgewählt ist aus der Gruppe bestehend aus Natriumlignosulfonat, Kalziumlignosulfonat, Ammoniumlignosulfonat, Manganlignosulfonat, Kupferlignosulfonat, Zinklignosulfonat und Gemischen davon.

10. Zusammensetzung nach einem der Ansprüche 1-9, wobei die Zusammensetzung ein Tensid umfasst.

11. Verfahren zur Herstellung einer wässrigen Zusammensetzung, umfassend eine Metallverbindung, ein Lignosulfonat und Phosphorsäure und/oder ein Salz und/oder ein Hydrat und/oder einen Ester davon, wobei die Zusammensetzung eine Lösung ist und wobei:
(a) eine Metallverbindung, ein Lignosulfonat und Phosphorsäure und/oder ein Salz und/oder ein Hydrat und/oder ein Ester davon gemischt werden; und
(b) Wasser zu dem in Schritt (a) gebildeten Gemisch hinzugefügt wird, wobei die Zusammensetzung einen pH von 4,5 bis 6 hat.

12. Verwendung einer wässrigen Zusammensetzung, umfassend eine Metallverbindung, ein Lignosulfonat und Phosphorsäure und/oder ein Salz und/oder ein Hydrat und/oder ein Ester davon als Fungizid, Bakterizid und/oder Pflanzendüngemittel, wobei die Zusammensetzung einen pH von 4,5 bis 6 hat.

13. Verwendung nach Anspruch 12, wobei die Zusammensetzung die Zusammensetzung nach einem der Ansprüche 1-10 ist.

14. Verwendung von Lignosulfonat in einer wässrigen Zusammensetzung, umfassend ein Metallsalz und ein Phosphitsalz, um die Bildung eines Metallphosphitpräzipitats zu verhindern; wobei die Zusammensetzung eine Lösung ist; und wobei die Zusammensetzung einen pH zwischen 4,5 und 6 hat.

## Revendications

1. Composition aqueuse comprenant un composé métallique, un lignosulfonate et de l'acide phosphoreux et/ou un sel et/ou un hydrate et/ou un ester de celui-ci, dans laquelle la composition est une solution, et dans laquelle la composition présente un pH de 4,5 à 6.

2. Composition fongicide ou bactéricide aqueuse comprenant un composé métallique, un lignosulfonate et de l'acide phosphoreux et/ou un sel et/ou un hydrate et/ou un ester de celui-ci, dans laquelle la composition est une solution, et dans laquelle la composition présente un pH de 4,5 à 6.

3. Composition aqueuse d'engrais comprenant un composé métallique, un lignosulfonate et de l'acide phosphoreux et/ou un sel et/ou un hydrate et/ou un ester de celui-ci, dans laquelle la composition est une solution et dans laquelle la composition présente un pH de 4,5 à 6.

4. Composition selon l'une quelconque des revendications 1 à 3, dans laquelle la composition comprend 0,1 % en poids à 40 % en poids de matière sèche, calculé sur la base du poids total de la composition aqueuse.

5. Composition selon l'une quelconque des revendications 1 à 4, dans laquelle le rapport entre l'ion métallique ou les ions métalliques et le lignosulfonate est situé entre 1:1 (en poids/poids) et 1:100 (en poids/poids).

6. Composition selon la revendication 5, dans laquelle le rapport entre l'ion métallique ou les ions métalliques et le lignosulfonate est situé entre 1:5 (en poids/poids) et 1:100 (en poids/poids).

7. Composition selon l'une quelconque des revendications 1 à 6, dans laquelle la concentration de l'acide phosphoreux et/ou d'un sel et/ou d'un hydrate et/ou d'un ester de celui-ci est située entre 0,1 mM et 2000 mM.

8. Composition selon l'une quelconque des revendications 1 à 7, dans laquelle le composé métallique comprend un ion métallique sélectionné dans le groupe consistant en le cuivre, le zinc, le manganèse, le nickel, le magnésium et leurs mélanges.

9. Composition selon l'une quelconque des revendications 1 à 8, dans laquelle le lignosulfonate est sélectionné dans le groupe consistant en le lignosulfonate de sodium, le lignosulfonate de calcium, le lignosulfonate d'ammonium, le lignosulfonate de manganèse, le lignosulfonate de cuivre, le lignosulfonate de zinc et leurs mélanges.

10. Composition selon l'une quelconque des revendications 1 à 9, dans laquelle la composition comprend un tensioactif.

11. Méthode de préparation d'une composition aqueuse comprenant un composé métallique, un lignosulfonate et de l'acide phosphoreux et/ou un sel et/ou un hydrate et/ou un ester de celui-ci, dans laquelle la composition est une solution, et dans laquelle :
(a) un composé métallique, un lignosulfonate et de l'acide phosphoreux et/ou un sel et/ou un hydrate et/ou un ester de celui-ci sont mélangés ; et
(b) de l'eau est ajoutée au mélange formé dans l'étape (a), dans laquelle la composition présente un pH de 4,5 à 6.

12. Utilisation d'une composition aqueuse comprenant un composé métallique, un lignosulfonate et de l'acide phosphoreux et/ou un sel et/ou un hydrate et/ou un ester de celui-ci comme fongicide, bactéricide et/ou engrais pour les plantes, dans laquelle la composition présente un pH de 4,5 à 6.

13. Utilisation selon la revendication 12, dans laquelle la composition est la composition selon l'une quelconque des revendications 1 à 10.

14. Utilisation d'un lignosulfonate dans une composition aqueuse comprenant un sel métallique et un sel de phosphite afin de prévenir la formation d'un précipité de phosphite métallique ; dans laquelle la composition est une solution ; et dans laquelle la composition présente un pH de 4,5 à 6.
